# EUROPÄISCHE PATENTSCHRIFT

(11) **EP 3 721 145 B1**
(45) Veröffentlichungstag und Bekanntmachung des Hinweises auf die Patenterteilung: **07.06.2023**
(21) Anmeldenummer: 19701770.0
(22) Anmeldetag: 07.01.2019
(51) Int. Cl.: F24F 11/00, B60H 1/00, F24F 110/10

(54) **VERFAHREN ZUM BETREIBEN EINER KLIMAANLAGE, REGLER, KLIMATISIERUNGSSYSTEM UND MASCHINENLESBARES SPEICHERMEDIUM**
METHOD FOR OPERATING AN AIR-CONDITIONING UNIT, CONTROLLER, CLIMATE-CONTROL SYSTEM AND MACHINE-READABLE STORAGE MEDIUM
PROCÉDÉ PERMETTANT DE FAIRE FONCTIONNER UNE INSTALLATION DE CLIMATISATION, RÉGULATEUR, SYSTÈME DE CLIMATISATION ET SUPPORT DE STOCKAGE LISIBLE PAR MACHINE

(30) Priorität: 07.02.2018 DE 102018201915
(43) Veröffentlichungstag der Anmeldung: 14.10.2020
(73) Patentinhaber: Siemens Mobility GmbH, 81739 München (DE)
(72) Erfinder: EHRIG, Markus, 47918 Tönisvorst (DE)
(74) Vertreter: Siemens Patent Attorneys
(86) Internationale Anmeldenummer: PCT/EP2019/050238
(87) Internationale Veröffentlichungsnummer: WO 2019/154569

(56) Entgegenhaltungen:
- WO-A2-2011/053992
- FR-A1- 2 916 685
- US-A- 5 400 963
- US-A1- 2014 277 759

## Beschreibung

Die Erfindung betrifft ein Verfahren zum Betreiben einer Klimaanlage bei dem geprüft wird, ob die Klimaanlage im Falle eines reinen Lüftungsbetriebs eine Innentemperatur eines zu klimatisierenden Raums auf einen Referenz-Sollwert regeln kann, der innerhalb eines vorgegebenen, durch eine Obergrenze und eine Untergrenze begrenzten Sollwertbandes liegt, und, falls die Prüfung ergibt, dass die Klimaanlage im Falle des reinen Lüftungsbetriebs die Innentemperatur nicht auf den Referenz-Sollwert regeln kann, ein Innentemperatur-Sollwert für die Klimaanlage auf einen vom Referenz-Sollwert verschiedenen Wert gesetzt wird, der innerhalb des Sollwertbandes liegt. Darüber hinaus betrifft die Erfindung einen Regler zum Regeln einer Klimaanlage, ein Klimatisierungssystem und ein maschinenlesbares Speichermedium.

Ein solches Verfahren, eingesetzt zur Klimatisierung eines Gebäudes, ist beispielsweise aus der WO 2011/053992 A2 bekannt. Vergleichbarer Stand der Technik ergibt sich aus der Druckschriften US 2014/277759 A1, US 5 400 963 A und FR 2 916 685 A1.

Eine Klimaanlage dient dazu, in einem zu klimatisierenden Raum eine angenehme oder benötigte Raumluft-Qualität bereitzustellen und aufrechtzuerhalten, insbesondere im Hinblick auf die Innentemperatur im zu klimatisierenden Raum.

Mithilfe einer Klimaanlage kann beispielsweise die Innentemperatur eines zu klimatisierenden Raums auf einen festgelegten, außentemperaturabhängigen Sollwert geregelt werden.

In manchen Einsatzgebieten von Klimaanlagen, wie zum Beispiel bei im öffentlichen Personenverkehr eingesetzten Fahrzeugen, kann in einer Norm bzw. einer Richtlinie ein außentemperaturabhängiges Sollwertband vorgegeben sein, innerhalb dessen der von einer Klimaanlage einzuhaltende Sollwert liegen darf. Alternativ kann ein solches Sollwertband im Rahmen technischer Grenzen frei einstellbar sein.

Aus ökologischer und wirtschaftlicher Sicht stellt der hohe Energieverbrauch einer Klimaanlage ein großes Problem dar. Eine Aufgabe der Erfindung ist es, einen energieeffizienten Betrieb einer Klimaanlage zu ermöglichen.

Diese Aufgabe wird erfindungsgemäß gelöst durch ein Verfahren nach Anspruch 1, durch einen Regler nach Anspruch 12, sowie durch ein maschinenlesbares Speichermedium nach Anspruch 14. Vorteilhafte Weiterbildungen der Erfindung sind in den weiteren Patentansprüchen sowie in der nachfolgenden Beschreibung angegeben.

Bei dem erfindungsgemäßen Verfahren zum Betreiben einer Klimaanlage wird geprüft, ob die Klimaanlage im Falle eines reinen Lüftungsbetriebs eine Innentemperatur eines zu klimatisierenden Raums auf einen Referenz-Sollwert regeln kann, der innerhalb eines vorgegebenen, durch eine Obergrenze und eine Untergrenze begrenzten Sollwertbandes liegt. Ferner wird, falls die Prüfung ergibt, dass die Klimaanlage im Falle des reinen Lüftungsbetriebs die Innentemperatur nicht auf den Referenz-Sollwert regeln kann, ein Innentemperatur-Sollwert für die Klimaanlage auf einen vom Referenz-Sollwert verschiedenen Wert gesetzt, der innerhalb des Sollwertbandes liegt.

Anders ausgedrückt, es wird geprüft, ob die Klimaanlage, sollte sie im reinen Lüftungsbetrieb betrieben werden, die Innentemperatur des zu klimatisierenden Raums auf den Referenz-Sollwert regeln kann, und, falls die Prüfung ergibt, dass dies nicht möglich ist, ein Innentemperatur-Sollwert für die Klimaanlage auf einen innerhalb des Sollwertbandes liegenden, vom Referenz-Sollwert verschiedenen Wert gesetzt.

Mit anderen Worten, die Erfindung sieht vor, dass der Innentemperatur-Sollwert, auf den die Innentemperatur mithilfe der Klimaanlage geregelt wird, nicht notwendigerweise dem fixen Referenz-Sollwert entsprechen muss und bei Bedarf - nämlich dann, wenn die Klimaanlage im Falle des reinen Lüftungsbetriebs die Innentemperatur nicht auf den Referenz-Sollwert regeln kann - ein anderer innerhalb des Sollwertbandes liegender Wert als Innentemperatur-Sollwert verwendet wird.

Durch das eventuelle Verwenden eines innerhalb des Sollwertbandes liegenden, vom Referenz-Sollwert verschiedenen Werts als Innentemperatur-Sollwert kann die von der Klimaanlage zu erbringende Heiz- bzw. Kühlleistung verringert werden. Zudem kann gegebenenfalls erreicht werden, dass die Klimaanlage im reinen Lüftungsbetrieb betrieben werden kann, wenn die Innentemperatur auf einen solchen Innentemperatur-Sollwert geregelt wird.

Der Erfindung liegt die Überlegung zugrunde, dass die Klimaanlage bei gegebener Außentemperatur im reinen Lüftungsbetrieb energieeffizienter betrieben werden kann als im Heizoder Kühlbetrieb der Klimaanlage, da im Heiz- bzw. Kühlbetrieb zusätzlich zu der Energie zum Einblasen von Zuluft in den zu klimatisierenden Raum auch noch Energie zum aktiven Aufheizen bzw. Abkühlen der einzublasenden Zuluft benötigt wird.

Unter dem Heizbetrieb der Klimaanlage ist vorliegend ein Betriebsmodus der Klimaanlage zu verstehen, bei dem Zuluft, die in den zu klimatisierenden Raum eingeblasen wird, aktiv durch die Klimaanlage aufgeheizt wird, insbesondere durch eine Heizeinheit der Klimaanlage. Ferner ist unter dem Kühlbetrieb der Klimaanlage ein Betriebsmodus der Klimaanlage zu verstehen, bei dem Zuluft, die in den zu klimatisierenden Raum eingeblasen wird, aktiv durch die Klimaanlage abgekühlt wird, insbesondere durch eine Kühleinheit der Klimaanlage. Der reine Lüftungsbetrieb hingegen ist ein Betriebsmodus der Klimaanlage, bei dem die Zuluft durch die Klimaanlage weder aktiv aufgeheizt noch aktiv abgekühlt wird.

Im reinen Lüftungsbetrieb kann die Innentemperatur auf einem konstanten Wert gehalten, verringert oder erhöht werden. Eine Erhöhung der Innentemperatur im reinen Lüftungsbetrieb kann zum Beispiel dadurch erreicht werden, dass die in den zu klimatisierenden Raum eingeblasene Zuluft Außenluft enthält, die wärmer ist als die Raumluft. Umgekehrt kann eine Verringerung der Innentemperatur im reinen Lüftungsbetrieb dadurch erreicht werden, dass die in den zu klimatisierenden Raum eingeblasene Zuluft Außenluft enthält, die kälter ist als die Raumluft.

Wenn bei gegebener Außentemperatur die Klimaanlage im Falle des reinen Lüftungsbetriebs die Innentemperatur nicht auf den Referenz-Sollwert regeln kann, kann es möglich sein, dass die Klimaanlage die Innentemperatur auf einen innerhalb des Sollwertbandes liegenden (und damit einen zulässigen Sollwert darstellenden) Innentemperatur-Sollwert regeln kann, der höher oder niedriger ist als der Referenz-Sollwert. Ist es bei gegebener Außentemperatur möglich, mithilfe der Klimaanlage die Innentemperatur auf einen solchen höheren bzw. niedrigeren Innentemperatur-Sollwert zu regeln, kann durch das Regeln der Innentemperatur auf einen solchen Innentemperatur-Sollwert im reinen Lüftungsbetrieb der Klimaanlage Energie gespart werden - verglichen mit dem Fall, dass die Innentemperatur im Heiz- oder Kühlbetrieb der Klimaanlage auf den Referenz-Sollwert geregelt wird.

Falls es bei gegebener Außentemperatur nicht möglich ist, im Falle des reinen Lüftungsbetriebs mithilfe der Klimaanlage die Innentemperatur auf einen innerhalb des Sollwertbandes liegenden Innentemperatur-Sollwert zu regeln, ist es energetisch günstig, wenn im Heizbetrieb die Innentemperatur mittels der Klimaanlage auf einen Sollwert geregelt wird, der an der Untergrenze des Sollwertbandes liegt, weil die Klimaanlage dann eine geringere Heizleistung erbringen muss als bei einem höheren Innentemperatur-Sollwert. Entsprechend ist es, falls es bei gegebener Außentemperatur nicht möglich ist, im Falle des reinen Lüftungsbetriebs mithilfe der Klimaanlage die Innentemperatur auf einen innerhalb des Sollwertbandes liegenden Innentemperatur-Sollwert zu regeln, energetisch günstig, wenn im Kühlbetrieb die Innentemperatur mithilfe der Klimaanlage auf einen Sollwert geregelt wird, der an der Obergrenze des Sollwertbandes liegt, weil die Klimaanlage dann eine geringere Kühlleistung erbringen muss als bei einem niedrigeren Innentemperatur-Sollwert.

Als Sollwertband im Sinne der Erfindung ist ein durch eine Obergrenze und eine Untergrenze begrenzter Bereich zu verstehen, innerhalb dessen der Innentemperatur-Sollwert liegen kann, auf den die Klimaanlage die Innentemperatur regelt.

Das Sollwertband definiert bei der jeweiligen Außentemperatur ein zulässiges Intervall für den Innentemperatur-Sollwert. Die Obergrenze und die Untergrenze des Sollwertbandes können insbesondere außentemperaturabhängige Grenzen sein.

Bei dem Referenz-Sollwert handelt es sich um einen bevorzugten (bzw. "idealen") Innentemperatur-Sollwert. Zweckmäßigerweise ist der Referenz-Sollwert ein voreingestellter Innentemperatur-Sollwert.

Die Prüfung, ob die Klimaanlage im Falle des reinen Lüftungsbetriebs die Innentemperatur des zu klimatisierenden Raums auf den Referenz-Sollwert regeln kann, kann in Abhängigkeit unterschiedlicher Parameter erfolgen. Zu diesen Parametern können beispielweise ein oder mehrere Parameter der Klimaanlage, insbesondere ihre maximale Heizleistung, ihre maximale Kühlleistung und/oder ihre maximale Luftfördermenge, gehören. Unter der maximalen Luftfördermenge der Klimaanlage ist der maximale Luftmassenstrom, der von Klimaanlange in den zu klimatisierenden Raum eingeblasen werden kann, zu verstehen.

Weitere mögliche Parameter, in Abhängigkeit derer die Prüfung erfolgen kann, sind ein Istwert der Innentemperatur des zu klimatisierenden Raums, ein Istwert der Außentemperatur und/oder das Volumen des zu klimatisierenden Raums.

In bevorzugter Weise hat der Referenz-Sollwert zu der Obergrenze und der Untergrenze des Sollwertbandes jeweils den gleichen Temperaturabstand. Alternativ kann der Referenz-Sollwert zu der Obergrenze des Sollwertbandes einen anderen Temperaturabstand aufweisen als zu der Untergrenze des Sollwertbandes.

Falls die Prüfung ergibt, dass die Klimaanlage im Falle des reinen Lüftungsbetriebs die Innentemperatur nicht auf den Referenz-Sollwert regeln kann, und falls der Istwert der Innentemperatur größer ist als der Referenz-Sollwert, liegt der vom Referenz-Sollwert verschiedene Wert, auf den der Innentemperatur-Sollwert gesetzt wird, näher an der Obergrenze des Sollwertbandes als der Referenz-Sollwert. Mit anderen Worten, falls die Prüfung ergibt, dass die Klimaanlage im Falle des reinen Lüftungsbetriebs die Innentemperatur nicht auf den Referenz-Sollwert regeln kann, wird der Innentemperatur-Sollwert auf einen höheren Wert als den Referenz-Sollwert gesetzt, wenn der Istwert der Innentemperatur größer ist als der Referenz-Sollwert. Dadurch kann die von der Klimaanlage zu erbringende Kühlleistung verringert werden, wodurch gegebenenfalls erzielt wird, dass der Innentemperatur-Sollwert im reinen Lüftungsbetrieb der Klimaanlage erreicht werden kann.

Falls die Prüfung ergibt, dass die Klimaanlage im Falle des reinen Lüftungsbetriebs die Innentemperatur nicht auf den Referenz-Sollwert regeln kann, und falls der Istwert der Innentemperatur kleiner ist als der Referenz-Sollwert, liegt der vom Referenz-Sollwert verschiedene Wert, auf den der Innentemperatur-Sollwert gesetzt wird, näher an der Untergrenze des Sollwertbandes als der Referenz-Sollwert. Anders ausgedrückt, ergibt die Prüfung, dass die Klimaanlage im Falle des reinen Lüftungsbetriebs die Innentemperatur nicht auf den Referenz-Sollwert regeln kann, wird der Innentemperatur-Sollwert auf einen niedrigeren Wert als den Referenz-Sollwert gesetzt, wenn der Istwert der Innentemperatur kleiner ist als der Referenz-Sollwert. Hierdurch kann die von der Klimaanlage zu erbringende Heizleistung verringert werden, wodurch gegebenenfalls erzielt wird, dass der Innentemperatur-Sollwert im reinen Lüftungsbetrieb der Klimaanlage erreicht werden kann.

Vorzugsweise wird in Abhängigkeit des Istwerts der Innentemperatur eine Wärmeleistung berechnet, welche von der Klimaanlage zu erbringen ist, um die Innentemperatur auf den Referenz-Sollwert zu bringen.

Als "von der Klimaanlage zu erbringende Wärmeleistung" ist vorliegend ein Wärmestrom (auch Wärmefluss genannt) zu verstehen, der von der Klimaanlage durch Einblasen von Zuluft in den zu klimatisierenden Raum eingebracht werden soll.

Ist die berechnete Wärmeleistung negativ, bedeutet das insbesondere, dass die Raumluft zu kühlen ist. Ist die berechnete Wärmeleistung hingegen positiv, bedeutet das insbesondere, dass Raumluft zu erwärmen ist.

Die Prüfung, ob die Klimaanlage im Falle des reinen Lüftungsbetriebs die Innentemperatur auf den Referenz-Sollwert regeln kann, kann insbesondere in Abhängigkeit der berechneten Wärmeleistung erfolgen.

Ergibt die Prüfung, dass die Klimaanlage im Falle des reinen Lüftungsbetriebs die Innentemperatur auf den Referenz-Sollwert regeln kann, wird die Innentemperatur mittels der Klimaanlage vorteilhafterweise auf den Referenz-Sollwert geregelt. Weiter ist es vorteilhaft, wenn die Klimaanlage dabei im reinen Lüftungsbetrieb betrieben wird. Auf diese Weise kann die Innentemperatur mithilfe der Klimaanlage energieeffizient auf den Referenz-Sollwert gebracht werden.

Falls die Prüfung ergibt, dass die Klimaanlage im Falle des reinen Lüftungsbetriebs die Innentemperatur nicht auf den Referenz-Sollwert regeln kann, wird bei einer vorteilhaften Ausgestaltung der Erfindung der Innentemperatur-Sollwert schrittweise angepasst. In bevorzugter Weise dient der Referenz-Sollwert dabei als Startwert. Das schrittweise Anpassen des Innentemperatur-Sollwerts ermöglicht es, (in iterativer Weise) einen Innentemperatur-Sollwert zu ermitteln, auf den die Klimaanlage die Innentemperatur im reinen Lüftungsbetrieb regeln kann.

Der Innentemperatur-Sollwert wird bei dem jeweiligen (Anpassungs-)Schritt vorzugsweise um einen vorgegebenen Temperaturschritt, von beispielsweise 0,5 °C, erhöht oder verringert. In bevorzugter Weise entspricht der vorgegebene Temperaturschritt dem Quotienten aus dem Temperaturabstand des Referenz-Sollwerts zu der Obergrenze bzw. Untergrenze des Sollwertbandes und einer natürlichen Zahl größer als 1.

Nach jedem Anpassen des Innentemperatur-Sollwerts wird vorteilhafterweise erneut geprüft wird, ob die Klimaanlage im Falle des reinen Lüftungsbetriebs die Innentemperatur auf den jeweils aktuellsten Innentemperatur-Sollwert regeln kann.

Weiter ist es bevorzugt, wenn für jede erneute Prüfung in Abhängigkeit des Istwerts der Innentemperatur eine Wärmeleistung berechnet wird, welche von der Klimaanlage zu erbringen ist, um die Innentemperatur auf den jeweils aktuellsten Innentemperatur-Sollwert zu bringen. Die jeweilige Prüfung, ob die Klimaanlage im Falle des reinen Lüftungsbetriebs die Innentemperatur auf den jeweils aktuellsten Innentemperatur-Sollwert regeln kann, kann insbesondere in Abhängigkeit dieser Wärmeleistung (d. h. der aktuellsten berechneten Wärmeleistung) erfolgen.

Vorteilhafterweise wird das Anpassen des Innentemperatur-Sollwerts beendet, wenn der aktuellste Innentemperatur-Sollwert der Ober- oder Untergrenze des Sollwertbandes entspricht oder wenn der aktuellste Innentemperatur-Sollwert ein Innentemperatur-Sollwert ist, auf den die Klimaanlage im Falle des reinen Lüftungsbetriebs die Innentemperatur regeln kann.

In bevorzugter Weise ist das schrittweise Anpassen des Innentemperatur-Sollwerts ein schrittweises Erhöhen des Innentemperatur-Sollwerts, wenn der Istwert der Innentemperatur größer ist als der Referenz-Sollwert. Ist der Istwert der Innentemperatur hingegen kleiner als der Referenz-Sollwert, ist das schrittweise Anpassen des Innentemperatur-Sollwerts vorzugsweise ein schrittweises Verringern des Innentemperatur-Sollwerts.

Der Innentemperatur-Sollwert kann insbesondere mehrmals (d. h. in mehreren Schritten) angepasst werden, bis das schrittweise Anpassen des Innentemperatur-Sollwerts beendet wird. Alternativ kann gegebenenfalls nur eine einzelne Anpassung erfolgen, bis das schrittweise Anpassen des Innentemperatur-Sollwerts beendet wird. Letzteres kann zum Beispiel der Fall sein, wenn durch eine einzelne Erhöhung oder Verringerung des Innentemperatur-Sollwerts um einen vorgegebenen Temperaturschritt, der Innentemperatur-Sollwert einem Innentemperatur-Sollwert entspricht, auf den die Klimaanlage die Innentemperatur regeln kann.

Das zuvor erwähnte Setzen des Innentemperatur-Sollwerts und das zuvor erwähnte Anpassen des Innentemperatur-Sollwerts gehen nicht notwendigerweise mit einem Regeln der Innentemperatur auf den jeweils aktuellsten Innentemperatur-Sollwert einher. Der aktuellste Innentemperatur-Sollwert kann beispielweise zunächst zwischengespeichert werden. Ergibt eine anschließende Prüfung, dass die Klimaanlage im Falle des reinen Lüftungsbetriebs die Innentemperatur nicht auf aktuellsten Innentemperatur-Sollwert regeln kann, kann dieser Innentemperatur-Sollwert gegebenenfalls - ohne dass auf diesen Innentemperatur-Sollwert geregelt worden ist - durch einen anderen Innentemperatur-Sollwert ersetzt werden.

Wenn das schrittweise Anpassen des Innentemperatur-Sollwerts beendet ist, wird die Innentemperatur vorteilhafterweise mittels der Klimaanlage auf den aktuellsten Innentemperatur-Sollwert geregelt.

In einer bevorzugten Ausführungsform der Erfindung wird die Klimaanlage im Heiz- oder Kühlbetrieb betrieben, falls das schrittweise Anpassen des Innentemperatur-Sollwerts beendet ist und der aktuellste Innentemperatur-Sollwert kein Innentemperatur-Sollwert ist, auf den die Klimaanlage im Falle des reinen Lüftungsbetriebs die Innentemperatur regeln kann.

Falls das schrittweise Anpassen des Innentemperatur-Sollwerts beendet ist und der aktuellste Innentemperatur-Sollwert ein Innentemperatur-Sollwert ist, auf den die Klimaanlage im Falle des reinen Lüftungsbetriebs die Innentemperatur regeln kann, wird die Klimaanlage vorteilhafterweise im reinen Lüftungsbetrieb betrieben. Dadurch kann die Innentemperatur mithilfe der Klimaanlage energieeffizient auf den aktuellsten Innentemperatur-Sollwert gebracht werden.

Alternativ zu einer schrittweisen Anpassung des Innentemperatur-Sollwerts kann vorgesehen sein, dass der Innentemperatur-Sollwert direkt auf einen Innentemperatur-Sollwert gesetzt wird, auf den die Klimaanlage im Falle des reinen Lüftungsbetriebs die Innentemperatur regeln kann - vorausgesetzt es existiert solch ein Innentemperatur-Sollwert. Zweckmäßigerweise wird solch ein Innentemperatur-Sollwert zuvor berechnet.

Vorteilhafterweise wird die Innentemperatur im Falle des Heizbetriebs der Klimaanlage auf die Untergrenze des Sollwertbandes geregelt. Im Falle des Kühlbetriebs der Klimaanlage wird die Innentemperatur vorteilhafterweise auf die Obergrenze des Sollwertbandes geregelt. Alternativ kann die Innentemperatur im Heizbetrieb der Klimaanlage und/oder im Kühlbetrieb der Klimaanlage auf den Referenz-Sollwert geregelt werden, insbesondere aus Komfortgründen.

Die Prüfung, ob die Klimaanlage im Falle des reinen Lüftungsbetriebs die Innentemperatur auf den Referenz-Sollwert regeln kann, kann insbesondere in Abhängigkeit einer in den zu klimatisierenden Raum einzublasenden Mindestaußenluftmenge erfolgen.

Der Ausdruck "Mindestaußenluftmenge" bezieht sich auf den Massenstrom an Außenluft, der mindestens in den zu klimatisierenden Raum eingeblasen werden soll, insbesondere um Ermüdungserscheinungen bei Personen zu vermeiden, die sich im zu klimatisierenden Raum befinden.

Die in den zu klimatisierenden Raum einzublasende Mindestau-ßenluftmenge kann beispielsweise durch eine Norm oder Richtlinie vorgegeben sein, gegebenenfalls in Abhängigkeit eines oder mehrerer Parameter. Ferner kann vorgesehen sein, dass die in den zu klimatisierenden Raum einzublasende Mindestau-ßenluftmenge in Abhängigkeit der CO₂-Konzentration im zu klimatisierenden Raum und/oder in Abhängigkeit der im zu klimatisierenden Raum befindlichen Personen berechnet wird.

Zur Ermittlung der CO₂-Konzentration im zu klimatisierenden Raum kann zum Beispiel ein CO₂-Sensor verwendet werden. Die Anzahl der im zu klimatisierenden Raum befindlichen Personen kann unter anderem mithilfe von Drucksensoren im Boden und/oder in Sitzen, mithilfe eines Personenzählgeräts an einer Zugangstür und/oder mithilfe eines optischen Systems anhand von Bilderkennung ermittelt werden. Kommt die Erfindung bei einem Fahrzeug zum Einsatz, kann die Anzahl der im zu klimatisierenden Raum befindlichen Personen beispielweise mithilfe einer Messvorrichtung zur Ermittlung des Fahrzeuggewichts ermittelt werden.

Die jeweilige Prüfung, ob die Klimaanlage im Falle des reinen Lüftungsbetriebs die Innentemperatur auf den jeweils aktuellsten Innentemperatur-Sollwert regeln kann, erfolgt vorzugsweise in Abhängigkeit der in den zu klimatisierenden Raum einzublasenden Mindestaußenluftmenge.

Bei einer vorteilhaften Ausgestaltung der Erfindung erfolgt die Prüfung, ob die Klimaanlage im Falle des reinen Lüftungsbetriebs die Innentemperatur auf den Referenz-Sollwert regeln kann, für verschiedene Zuluft-Zusammensetzungen.

Der Ausdruck "Zuluft-Zusammensetzung" bezieht sich auf die Zusammensetzung der in den zu klimatisierenden Raum einzublasenden Zuluft aus Außen- und Umluft. Die einzublasende Zuluft kann zum Beispiel aus 100% Außenluft bestehen oder aus Mischung von Außen- und Umluft. Gegebenenfalls kann die einzublasende Zuluft aus 100% Umluft bestehen, solange vorzugsweise ein vorgegebener Schwellwert der CO₂-Konzentration im zu klimatisierendem Raum nicht überschritten wird.

Ferner kann vorgesehen sein, dass die Ober- und Untergrenze einen Temperaturabstand von beispielsweise höchstens 4 °C zueinander aufweisen. Dadurch lässt sich vermeiden, dass der Innentemperatur-Sollwert (bei gegebener Außentemperatur) stark variieren kann. Auf diese Weise können starke Schwankungen der Innentemperatur, welche von im zu klimatisierenden Raum befindlichen Personen als unangenehm empfunden werden können, vermeiden werden. Alternativ oder zusätzlich kann zur Vermeidung schneller Schwankungen der Innentemperatur vorgesehen sein, dass das Regeln auf den Innentemperatur-Sollwert derart erfolgt, dass das Erreichen des jeweils aktuellsten Innentemperatur-Sollwerts eine vorgegebene Mindestdauer nicht unterschreitet.

Der erfindungsgemäße Regler zum Regeln einer Klimaanlage ist dazu eingerichtet, zu prüfen, ob die Klimaanlage im Falle eines reinen Lüftungsbetriebs eine Innentemperatur eines zu klimatisierenden Raums auf einen Referenz-Sollwert regeln kann, der innerhalb eines vorgegebenen, durch eine Obergrenze und eine Untergrenze begrenzten Sollwertbandes liegt. Ferner ist der Regler dazu eingerichtet, einen Innentemperatur-Sollwert für die Klimaanlage auf einen innerhalb des Sollwertbandes liegenden, vom Referenz-Sollwert verschiedenen Wert zu setzen, falls die Prüfung ergibt, dass die Klimaanlage im Falle des reinen Lüftungsbetriebs die Innentemperatur nicht auf den Referenz-Sollwert regeln kann, und, falls die Prüfung ergibt, dass die Klimaanlage im Falle des reinen Lüftungsbetriebs die Innentemperatur nicht auf den Referenz-Sollwert regeln kann, dass
- der vom Referenz-Sollwert verschiedene Wert, auf den der Innentemperatur-Sollwert gesetzt wird, näher an der Obergrenze des Sollwertbandes liegt als der Referenz-Sollwert, wenn ein Istwert der Innentemperatur größer ist als der Referenz-Sollwert, beziehungsweise
- der vom Referenz-Sollwert verschiedene Wert, auf den der Innentemperatur-Sollwert gesetzt wird, näher an der Untergrenze des Sollwertbandes liegt als der Referenz-Sollwert, wenn der Istwert der Innentemperatur kleiner ist als der Referenz-Sollwert.

Der Regler weist vorteilhafterweise einen Datenspeicher auf, in dem ein Computerprogramm hinterlegt werden kann. Außerdem weist der Regler vorteilhafterweise einen Prozessor auf, mittels welchem ein im Datenspeicher hinterlegtes Computerprogramm ausgeführt werden kann.

Vorzugsweise ist der Regler mithilfe eines im Datenspeicher hinterlegten und vom Prozessor ausführbaren Computerprogramms dazu eingerichtet, besagte Schritte ("Prüfen" und etwaiges "Setzen des Innentemperatur-Sollwerts") auszuführen. Mit anderen Worten, der Regler ist vorzugsweise dazu programmiert, besagte Schritte auszuführen.

Weiter ist es bevorzugt, wenn der Referenz-Sollwert im Regler, insbesondere in besagtem Datenspeicher des Reglers, hinterlegt ist. Des Weiteren ist das Sollwertband vorzugsweise im Regler, insbesondere in besagtem Datenspeicher des Reglers, hinterlegt. Bei einer vorteilhaften Ausführungsform der Erfindung sind/ist der Referenz-Sollwert, die Obergrenze des Sollwertbandes und/oder die Untergrenze des Sollwertbandes über ein mit dem Regler verbindbares Bedienelement verstellbar.

Zweckmäßigerweise ist der Regler mit einer Schnittstelle ausgestattet, mittels welcher der Regler mit der zu regelnden Klimaanlage verbindbar ist und über welche der Regler Steuerbefehle an die Klimaanlage übermitteln kann.

Das Klimatisierungssystem gemäß einer Ausgestaltung der Erfindung umfasst eine Klimaanlage sowie einen mit der Klimaanlage verbundenen Regler der oben genannten Art zum Regeln der Klimaanlage.

Das Klimatisierungssystem kann insbesondere zur Durchführung des oben beschriebenen Verfahrens eingesetzt werden.

In bevorzugter Weise sind die weiter oben im Zusammenhang mit dem Verfahren genannten Verfahrensschritte (Prüfen, Berechnen, Setzen/Anpassen des Innentemperatur-Sollwerts, Regeln auf den Innentemperatur-Sollwert) mithilfe des Reglers realisierbar. Anders ausgedrückt, der Regler ist vorzugsweise dazu eingerichtet, diese Verfahrensschritte auszuführen.

Des Weiteren kann das Klimatisierungssystem den zu klimatisierenden Raum umfassen. Anders ausgedrückt, der zu klimatisierenden Raum kann ein Teil des Klimatisierungssystems sein. Ferner kann das Klimatisierungssystem einen Temperatursensor zum Ermitteln eines Istwerts der Innentemperatur des zu klimatisierenden Raums und/oder einen Temperatursensor zum Ermitteln eines Istwerts der Außentemperatur umfassen. Der jeweilige Temperatursensor ist zweckmäßigerweise mit dem Regler verbunden und dazu eingerichtet, den ermittelten Istwert an den Regler zu übermitteln.

Das Klimatisierungssystem kann ein Bestandteil eines Fahrzeugs sein. Bei dem Fahrzeug handelt es sich vorzugsweise um ein Fahrzeug zur Personenbeförderung, insbesondere um ein Fahrzeug für den öffentlichen Personenverkehr. Beispielsweise kann das Fahrzeug ein Schienenfahrzeug oder ein Omnibus sein. Der zu klimatisierende Raum ist vorzugsweise ein Fahrgastraum oder ein Fahrzeugführerraum des Fahrzeugs.

In einer alternativen Ausführungsvariante der Erfindung kann das Klimatisierungssystem ein Bestandteil eines Gebäudes sein.

Weiter oben im Zusammenhang mit dem erfindungsgemäßen Verfahren beschriebene Ausführungsformen, Ausführungsdetails und Vorteile können sich auch auf den erfindungsgemäßen Regler und/oder das erfindungsgemäße Klimatisierungssystem beziehen. Des Weiteren betrifft die Erfindung, wie eingangs erwähnt, ein maschinenlesbares Speichermedium.

Das erfindungsgemäße Speichermedium enthält ein Programmcode, durch welchen ein Klimatisierungssystem der oben beschriebenen Art zur Ausführung des oben beschriebenen Verfahrens veranlasst wird, wenn der Programmcode vom Regler des Klimatisierungssystems ausgeführt wird. Mit anderen Worten, der auf dem Speichermedium enthaltene Programmcode befähigt ein Klimatisierungssystem der oben beschriebenen Art zur Ausführung des oben beschriebenen Verfahrens.

Die Erfindung ist in den Patentansprüchen definiert.

Es zeigen:
- FIG 1: ein Fahrzeug, das ein Klimatisierungssystem mit einer Klimaanlage umfasst;
- FIG 2: ein Diagramm, in dem ein Sollwertband sowie eine Referenz-Sollwertkurve als Funktion der Außentemperatur dargestellt sind;
- FIG 3: einen Verfahrensablauf eines Verfahrens zum Betreiben der Klimaanlage des Klimatisierungssystems.

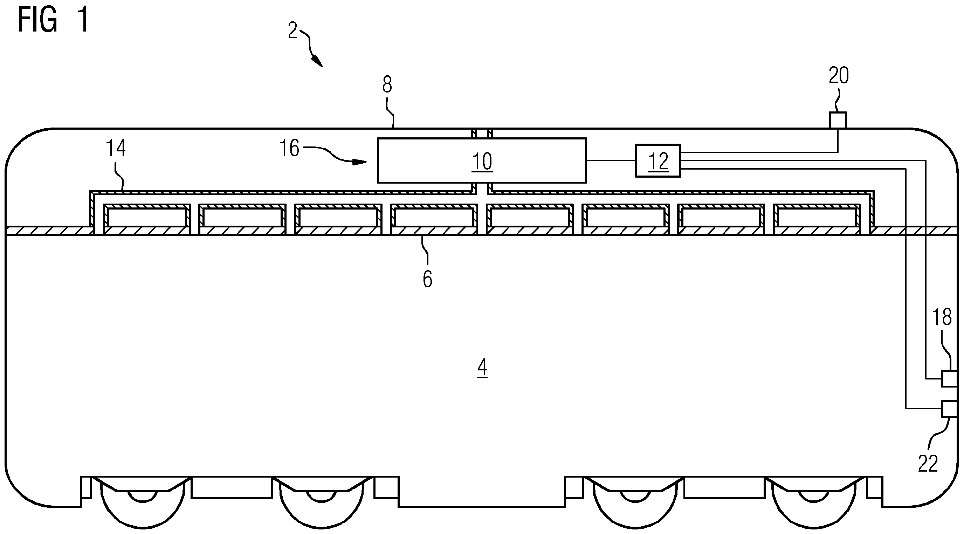

FIG 1 zeigt schematisch ein Fahrzeug 2 zur Personenbeförderung. Im vorliegenden Ausführungsbeispiel handelt es sich bei dem Fahrzeug 2 um ein Schienenfahrzeug.

Das Fahrzeug 2 umfasst einen Fahrgastraum 4 sowie eine den Fahrgastraum 4 nach oben begrenzende Innendecke 6, welche als Lochdecke ausgebildet ist. Im vorliegenden Ausführungsbeispiel stellt der Fahrgastraum 4 des Fahrzeugs 2 einen zu klimatisierenden Raum des Fahrzeugs 2 dar.

Zwischen seinem Wagenkastendach 8 und der Innendecke 6 weist das Fahrzeug 2 eine Klimaanlage 10 sowie einen mit der Klimaanlage 10 verbundenen Regler 12 zum Regeln der Klimaanlage 10 auf. Die Klimaanlage 10 ist in einem Heizbetrieb, einem Kühlbetrieb sowie einem reinen Lüftungsbetrieb betreibbar.

Des Weiteren umfasst das Fahrzeug 2 im vorliegenden Ausführungsbeispiel eine mit der Klimaanlage 10 verbundene Luftführung 14, welche dazu dient, in den Fahrgastraum 4 einzublasende Zuluft von der Klimaanlage 10 durch die Innendecke 6 in den Fahrgastraum 4 zu leiten. Die Klimaanlage 10, der Regler 12 und besagte Luftführung 14 sind Elemente eines Klimatisierungssystems 16 des Fahrzeugs 2.

Das Klimatisierungssystem 16 umfasst zusätzlich zu den genannten Elementen einen ersten Temperatursensor 18 zum Messen eines Istwerts der Innentemperatur des Fahrgastraums 4, einen zweiten Temperatursensor 20 zum Messen eines Istwerts der Außentemperatur (also der Temperatur außerhalb des Fahrzeugs 2) sowie einen CO₂-Sensor 22 zum Messen der CO₂-Konzentration im Fahrgastraum 4. Besagte Sensoren 18, 20, 22 sind jeweils mit dem Regler 12 verbunden.

Alternativ oder zusätzlich zu der oben genannten Luftführung 14 kann das Klimatisierungssystem 16 eine oder mehrere andere mit der Klimaanlage 10 verbundene Luftführungen zum Einblasen von Zuluft in den Fahrgastraum 4 und/oder zum Absaugen von Raumluft aus dem Fahrgastraum 4 aufweisen, wobei solche weiteren Luftführungen einer besseren Übersichtlichkeit halber figürlich nicht dargestellt sind. Solch eine andere Luftführung kann beispielweise dazu dienen, im Bodenbereich des Fahrgastraums 4 Zuluft in den Fahrgastraum 4 einzublasen und/oder Raumluft aus dem Fahrgastraum 4 abzusaugen.

Im Betrieb des Fahrzeugs 2 misst der erste Temperatursensor 18 den Istwert der Innentemperatur, während der zweite Temperatursensor 20 den Istwert der Außentemperatur misst und der CO₂-Sensor 22 die CO₂-Konzentration im Fahrgastraum 4 misst. Die Sensoren 18, 20, 22 übermitteln die gemessenen Werte an den Regler 12, der in Abhängigkeit dieser Werte die Klimaanlage 10 regelt.

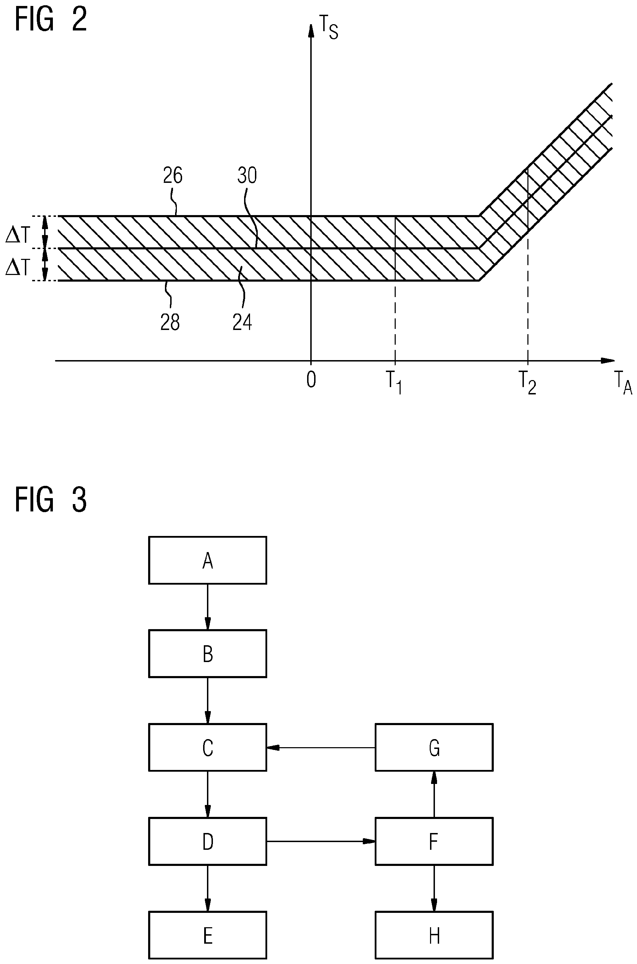

FIG 2 zeigt ein Diagramm, in dem ein exemplarischer Verlauf eines im Regler 12 hinterlegten Sollwertbandes 24 als Funktion der Außentemperatur T_{A} dargestellt ist.

Nach oben ist das Sollwertband 24 durch eine außentemperaturabhängige Obergrenze 26 begrenzt. Nach unten ist das Sollwertband 24 durch eine außentemperaturabhängige Untergrenze 28 begrenzt. Die Obergrenze 26 und die Untergrenze 28 des Sollwertbandes 24 definieren bei der jeweiligen Außentemperatur T_{A} ein Intervall, innerhalb dessen ein Innentemperatur-Sollwert T_{S} für die Klimaanlage 10 liegen darf.

Innerhalb des Sollwertbandes 24 liegt eine im Regler 12 hinterlegte außentemperaturabhängige Referenz-Sollwertkurve 30. Im vorliegenden Ausführungsbeispiel hat die Referenz-Sollwertkurve 30 sowohl zur Obergrenze 26 des Sollwertbandes 24 als auch zur Untergrenze 28 des Sollwertbandes 24 jeweils den gleichen Temperaturabstand ΔT. Die Referenz-Sollwertkurve 30 definiert bei der jeweiligen Außentemperatur T_{A} einen bevorzugten Innentemperatur-Sollwert T_{S} für die Klimaanlage 10 (nachfolgend als Referenz-Sollwert bezeichnet).

Im vorliegenden Beispiel wird angenommen, dass es bei Außentemperaturen T_{A}, die innerhalb des durch die Temperaturwerte T₁ und T₂ definierten Temperaturintervalls liegen, möglich ist, im reinen Lüftungsbetrieb der Klimaanlage 10 die Innentemperatur mittels der Klimaanlage 10 auf einen im Sollwertband 24 liegenden Sollwert T_{S} zu regeln, wohingegen dies bei Außentemperaturen T_{A}, die außerhalb des durch die Temperaturwerte T₁ und T₂ definierten Temperaturintervalls liegen, nicht möglich ist. Liegt die Außentemperatur T_{A} oberhalb von T₂ muss die in den Fahrgastraum 4 einzublasende Zuluft von der Klimaanlage 10 aktiv gekühlt werden. Liegt die Außentemperatur T_{A} hingegen unterhalb von T₁ muss die in den Fahrgastraum 4 einzublasende Zuluft von der Klimaanlage 10 aktiv aufgeheizt werden.

FIG 3 zeigt einen Verfahrensablauf eines Verfahrens, gemäß welchem die Klimaanlage 10 betrieben werden kann. Dieses Verfahren ermöglicht einen energieeffizienten Betrieb der Klimaanlage 10.

Zunächst erfassen die zuvor erwähnten Sensoren 18, 20, 22 den Istwert der Innentemperatur im Fahrgastraum 4, den Istwert der Außentemperatur sowie die CO₂-Konzentration im Fahrgastraum 4 und übermitteln diese Messwerte an den Regler 12 (Verfahrensschritt A).

In Abhängigkeit der gemessenen CO₂-Konzentration im Fahrgastraum 4 berechnet der Regler 12 die in den Fahrgastraum 4 einzublasende Mindestaußenluftmenge (Verfahrensschritt B).

Der anfängliche Innentemperatur-Sollwert T_{S} für die Klimaanlage 10, der im Regler 12 hinterlegt ist, entspricht dem Referenz-Sollwert, welcher der gemessenen Außentemperatur T_{A} zugeordnet ist. Das heißt, der anfängliche Innentemperatur-Sollwert T_{S} entspricht demjenigen Punkt auf der Referenz-Sollwertkurve 30, welcher der gemessenen Außentemperatur T_{A} zugeordnet ist (vgl. FIG 2).

In Abhängigkeit des gemessenen Istwerts der Innentemperatur sowie in Abhängigkeit des gemessenen Istwerts der Außentemperatur berechnet der Regler 12 eine Wärmeleistung, die von der Klimaanlage 10 zu erbringen ist, um die Innentemperatur im Fahrgastraum 4 auf den Innentemperatur-Sollwert T_{S} zu bringen (Verfahrensschritt C).

Alternativ kann die Berechnung der in den Fahrgastraum 4 einzublasenden Mindestaußenluftmenge (Verfahrensschritt B) zum Beispiel nach der Berechnung der Wärmeleistung (Verfahrensschritt C) erfolgen.

Des Weiteren prüft der Regler 12 in Abhängigkeit der berechneten Wärmeleistung sowie in Abhängigkeit der in den Fahrgastraum 4 einzublasenden Mindestaußenluftmenge, ob die Klimaanlage 10 im Falle des reinen Lüftungsbetriebs die Innentemperatur im Fahrgastraum 4 auf den Innentemperatur-Sollwert T_{S} regeln kann (Verfahrensschritt D). Diese Prüfung erfolgt gegebenenfalls für verschiedene Zuluft-Zusammensetzungen, bei denen der Außenluft-Anteil an der in den Fahrgastraum 4 einzublasenden Zuluft jeweils mindestens so groß ist, dass sichergestellt werden kann, dass beim Einblasen der Zuluft zumindest die berechnete Mindestaußenluftmenge in den Fahrgastraum 4 eingebracht wird.

Falls die Prüfung ergibt, dass die Klimaanlage 10 im Falle des reinen Lüftungsbetriebs die Innentemperatur im Fahrgastraum 4 auf den Innentemperatur-Sollwert T_{S} regeln kann, wird die Innentemperatur mithilfe der Klimaanlage 10 auf den Innentemperatur-Sollwert T_{S} geregelt, wobei die Klimaanlage 10 im reinen Lüftungsbetrieb betrieben wird (Verfahrensschritt E) .

Ergibt die Prüfung hingegen, dass die Klimaanlage 10 im Falle des reinen Lüftungsbetriebs die Innentemperatur im Fahrgastraum 4 nicht auf den Innentemperatur-Sollwert T_{S} regeln kann, wird vom Regler 12 geprüft, ob eine Anpassung des Innentemperatur-Sollwerts T_{S} innerhalb des Sollwertbandes 24 möglich ist (Verfahrensschritt F).

Bei der Prüfung, ob eine Anpassung des Innentemperatur-Sollwerts T_{S} innerhalb des Sollwertbandes 24 möglich ist, findet eine Fallunterscheidung statt. Ist der gemessene Istwert der Innentemperatur größer als der Referenz-Sollwert prüft der Regler 12 bei dieser Prüfung, ob der Innentemperatur-Sollwert T_{S} bei einer Erhöhung um einen vorgegebenen Temperaturschritt die Obergrenze 26 des Sollwertbandes 24 überschreiten würde. Ist der gemessene Istwert der Innentemperatur hingegen kleiner als der Referenz-Sollwert prüft der Regler 12 bei dieser Prüfung, ob der Innentemperatur-Sollwert T_{S} bei einer Verringerung um einen vorgegebenen Temperaturschritt die Untergrenze 28 des Sollwertbandes 24 unterschreiten würde. Der vorgegebene Temperaturschritt entspricht in beiden Fällen dem Quotienten aus dem Temperaturabstand ΔT des Referenz-Sollwerts zu der Obergrenze 26 bzw. Untergrenze 28 des Sollwertbandes 24 (vgl. FIG 2) und einer natürlichen Zahl größer als 1.

Ergibt die letztgenannte Prüfung, dass eine Anpassung des Innentemperatur-Sollwerts T_{S} innerhalb des Sollwertbandes 24 möglich ist, wird der bisherige Innentemperatur-Sollwert T_{S} um den vorgegebenen Temperaturschritt erhöht (falls der gemessene Istwert der Innentemperatur größer ist als der Referenz-Sollwert) bzw. um den vorgegebenen Temperaturschritt verringert (falls der gemessene Istwert der Innentemperatur kleiner ist als der Referenz-Sollwert) (Verfahrensschritt G).

Nach einer etwaigen Anpassung des Innentemperatur-Sollwerts T_{S} berechnet der Regler 12 in Abhängigkeit des gemessenen Istwerts der Innentemperatur sowie in Abhängigkeit des gemessenen Istwerts der Außentemperatur die Wärmleistung, die von der Klimaanlage 10 zu erbringen ist, um die Innentemperatur im Fahrgastraum 4 auf den aktuellen Innentemperatur-Sollwert T_{S} zu bringen (Verfahrensschritt C).

Dann prüft der Regler 12 in Abhängigkeit der neuen berechneten Wärmeleistung sowie in Abhängigkeit der in den Fahrgastraum 4 einzublasenden Mindestaußenluftmenge, ob die Klimaanlage 10 im Falle des reinen Lüftungsbetriebs die Innentemperatur auf den aktuellen Innentemperatur-Sollwert T_{S} regeln kann (Verfahrensschritt D).

Falls die Prüfung ergibt, dass die Klimaanlage 10 im Falle des reinen Lüftungsbetriebs die Innentemperatur auf den aktuellen Innentemperatur-Sollwert T_{S} regeln kann, wird die Innentemperatur mithilfe der Klimaanlage 10 auf den aktuellen Innentemperatur-Sollwert T_{S} geregelt, wobei die Klimaanlage 10 im reinen Lüftungsbetrieb betrieben wird (Verfahrensschritt E).

Ergibt die Prüfung hingegen, dass die Klimaanlage 10 im Falle des reinen Lüftungsbetriebs die Innentemperatur nicht auf den aktuellen Innentemperatur-Sollwert T_{S} regeln kann, wird vom Regler 12 erneut geprüft, ob eine Anpassung des Innentemperatur-Sollwerts T_{S} innerhalb des Sollwertbandes 24 möglich ist (Verfahrensschritt F).

Falls eine Anpassung des Innentemperatur-Sollwerts T_{S} innerhalb des Sollwertbandes 24 möglich ist, wird der bisherige Innentemperatur-Sollwert T_{S} um den vorgegebenen Temperaturschritt erhöht (falls der gemessene Istwert der Innentemperatur größer ist als der Referenz-Sollwert) bzw. um den vorgegebenen Temperaturschritt verringert (falls der gemessene Istwert der Innentemperatur kleiner ist als der Referenz-Sollwert) (Verfahrensschritt G).

Die Verfahrensschritte C, D, F und G werden so oft wiederholt, bis bei der Prüfung in Verfahrensschritt D vom Regler 12 festgestellt wird, dass der aktuellste Innentemperatur-Sollwert T_{S} ein Innentemperatur-Sollwert T_{S} ist, auf den die Klimaanlage 10 im Falle des reinen Lüftungsbetriebs die Innentemperatur regeln kann, oder bei der Prüfung in Verfahrensschritt F vom Regler 12 festgestellt wird, dass eine (weitere) Anpassung des Innentemperatur-Sollwerts T_{S} innerhalb des Sollwertbandes 24 nicht möglich ist.

In dem Fall, dass bei der Prüfung in Verfahrensschritt D vom Regler 12 festgestellt wird, dass der aktuellste Innentemperatur-Sollwert T_{S} ein Innentemperatur-Sollwert T_{S} ist, auf den die Klimaanlage 10 im Falle des reinen Lüftungsbetriebs die Innentemperatur regeln kann, wird die Innentemperatur mithilfe der Klimaanlage 10 auf den aktuellsten Innentemperatur-Sollwert T_{S} geregelt, wobei die Klimaanlage 10 im reinen Lüftungsbetrieb betrieben wird (Verfahrensschritt E).

In dem Fall, dass bei der Prüfung in Verfahrensschritt F vom Regler 12 festgestellt wird, dass eine (weitere) Anpassung des Innentemperatur-Sollwerts T_{S} innerhalb des Sollwertbandes 24 nicht möglich ist, (weil der Innentemperatur-Sollwert T_{S} bei einer weiteren Anpassung die Obergrenze 26 des Sollwertbandes 24 überschreiten bzw. die Untergrenze 28 des Sollwertbandes 24 unterschreiten würde,) wird die Klimaanlage 10 im Heiz- bzw. Kühlbetrieb betrieben und dabei die Innentemperatur auf den aktuellsten Innentemperatur-Sollwert T_{S} geregelt (Verfahrensschritt H).

Falls der gemessene Istwert der Innentemperatur größer ist als der Referenz-Sollwert, wird die Klimaanlage 10 beim Verfahrensschritt H im Kühlbetrieb betrieben, wobei der aktuellste Innentemperatur-Sollwert T_{S} in diesem Fall dem Wert der Obergrenze 26 bei der gemessenen Außentemperatur T_{A} entspricht. Ist der gemessene Istwert der Innentemperatur hingegen kleiner als der Referenz-Sollwert, wird die Klimaanlage 10 beim Verfahrensschritt H im Heizbetrieb betrieben, wobei der aktuellste Innentemperatur-Sollwert T_{S} in diesem Fall dem Wert der Untergrenze 28 bei der gemessenen Außentemperatur T_{A} entspricht.

Die Erfindung ist in den Patentansprüchen definiert.

## Patentansprüche

1. Verfahren zum Betreiben einer Klimaanlage (10), bei dem geprüft wird, ob die Klimaanlage (10) im Falle eines reinen Lüftungsbetriebs eine Innentemperatur eines zu klimatisierenden Raums (4) auf einen Referenz-Sollwert regeln kann, der innerhalb eines vorgegebenen, durch eine Obergrenze (26) und eine Untergrenze (28) begrenzten Sollwertbandes (24) liegt, und, falls die Prüfung ergibt, dass die Klimaanlage (10) im Falle des reinen Lüftungsbetriebs die Innentemperatur nicht auf den Referenz-Sollwert regeln kann, ein Innentemperatur-Sollwert (T_{S}) für die Klimaanlage (10) auf einen vom Referenz-Sollwert verschiedenen Wert gesetzt wird, der innerhalb des Sollwertbandes (24) liegt,
**dadurch gekennzeichnet, dass**, falls die Prüfung ergibt, dass die Klimaanlage (10) im Falle des reinen Lüftungsbetriebs die Innentemperatur nicht auf den Referenz-Sollwert regeln kann,
- der vom Referenz-Sollwert verschiedene Wert, auf den der Innentemperatur-Sollwert (Ts) gesetzt wird, näher an der Obergrenze (26) des Sollwertbandes (24) liegt als der Referenz-Sollwert, wenn ein Istwert der Innentemperatur größer ist als der Referenz-Sollwert, beziehungsweise
- der vom Referenz-Sollwert verschiedene Wert, auf den der Innentemperatur-Sollwert (Ts) gesetzt wird, näher an der Untergrenze (28) des Sollwertbandes (24) liegt als der Referenz-Sollwert, wenn der Istwert der Innentemperatur kleiner ist als der Referenz-Sollwert.

2. Verfahren nach Anspruch 1,
**dadurch gekennzeichnet, dass** in Abhängigkeit eines Istwerts der Innentemperatur eine Wärmeleistung berechnet wird, welche von der Klimaanlage (10) zu erbringen ist, um die Innentemperatur auf den Referenz-Sollwert zu bringen, und die Prüfung, ob die Klimaanlage (10) im Falle des reinen Lüftungsbetriebs die Innentemperatur auf den Referenz-Sollwert regeln kann, in Abhängigkeit der berechneten Wärmeleistung erfolgt.

3. Verfahren nach einem der voranstehenden Ansprüche, **dadurch gekennzeichnet, dass**, falls die Prüfung ergibt, dass die Klimaanlage (10) im Falle des reinen Lüftungsbetriebs die Innentemperatur auf den Referenz-Sollwert regeln kann, die Innentemperatur mittels der Klimaanlage (10) auf den Referenz-Sollwert geregelt wird, wobei die Klimaanlage (10) im reinen Lüftungsbetrieb betrieben wird.

4. Verfahren nach einem der voranstehenden Ansprüche, **dadurch gekennzeichnet, dass**, falls die Prüfung ergibt, dass die Klimaanlage (10) im Falle des reinen Lüftungsbetriebs die Innentemperatur nicht auf den Referenz-Sollwert regeln kann, der Innentemperatur-Sollwert (T_{S}) schrittweise angepasst wird und nach jedem Anpassen des Innentemperatur-Sollwerts (T_{S}) erneut geprüft wird, ob die Klimaanlage (10) im Falle des reinen Lüftungsbetriebs die Innentemperatur auf den jeweils aktuellsten Innentemperatur-Sollwert (T_{S}) regeln kann, wobei das Anpassen des Innentemperatur-Sollwerts (T_{S}) beendet wird, wenn der aktuellste Innentemperatur-Sollwert (T_{S}) der Oberoder Untergrenze (26, 28) des Sollwertbandes (24) entspricht oder wenn der aktuellste Innentemperatur-Sollwert (T_{S}) ein Innentemperatur-Sollwert ist, auf den die Klimaanlage (10) im Falle des reinen Lüftungsbetriebs die Innentemperatur regeln kann.

5. Verfahren nach Anspruch 5,
**dadurch gekennzeichnet, dass**
- das schrittweise Anpassen des Innentemperatur-Sollwerts (T_{S}) ein schrittweises Erhöhen des Innentemperatur-Sollwerts (Ts) ist, wenn ein Istwert der Innentemperatur größer ist als der Referenz-Sollwert, beziehungsweise
- das schrittweise Anpassen des Innentemperatur-Sollwerts (T_{S}) ein schrittweises Verringern des Innentemperatur-Sollwerts (Ts) ist, wenn ein Istwert der Innentemperatur kleiner ist als der Referenz-Sollwert.

6. Verfahren nach Anspruch 4 oder 5,
**dadurch gekennzeichnet, dass**, wenn das schrittweise Anpassen des Innentemperatur-Sollwerts (T_{S}) beendet ist, die Innentemperatur mittels der Klimaanlage (10) auf den aktuellsten Innentemperatur-Sollwert (T_{S}) geregelt wird.

7. Verfahren nach einem der Ansprüche 4 bis 6,
**dadurch gekennzeichnet, dass** die Klimaanlage (10) im Heizoder Kühlbetrieb betrieben wird, falls das schrittweise Anpassen des Innentemperatur-Sollwerts (T_{S}) beendet ist und der aktuellste Innentemperatur-Sollwert (T_{S}) kein Innentemperatur-Sollwert ist, auf den die Klimaanlage (10) im Falle des reinen Lüftungsbetriebs die Innentemperatur regeln kann.

8. Verfahren nach einem der Ansprüche 4 bis 7,
**dadurch gekennzeichnet, dass** die Klimaanlage (10) im reinen Lüftungsbetrieb betrieben wird, falls das schrittweise Anpassen des Innentemperatur-Sollwerts (T_{S}) beendet ist und der aktuellste Innentemperatur-Sollwert (T_{S}) ein Innentemperatur-Sollwert ist, auf den die Klimaanlage (10) im Falle des reinen Lüftungsbetriebs die Innentemperatur regeln kann.

9. Verfahren nach einem der voranstehenden Ansprüche,
**dadurch gekennzeichnet, dass** die Innentemperatur im Falle eines Heizbetriebs der Klimaanlage (10) auf die Untergrenze (28) des Sollwertbandes (24) und im Falle eines Kühlbetriebs der Klimaanlage (10) auf die Obergrenze (26) des Sollwertbandes (24) geregelt wird.

10. Verfahren nach einem der voranstehenden Ansprüche,
**dadurch gekennzeichnet, dass** die Prüfung, ob die Klimaanlage (10) im Falle des reinen Lüftungsbetriebs die Innentemperatur auf den Referenz-Sollwert regeln kann, in Abhängigkeit einer in den zu klimatisierenden Raum (4) einzublasenden Mindestau-ßenluftmenge erfolgt.

11. Verfahren nach einem der voranstehenden Ansprüche,
**dadurch gekennzeichnet, dass** die Prüfung, ob die Klimaanlage (10) im Falle des reinen Lüftungsbetriebs die Innentemperatur auf den Referenz-Sollwert regeln kann, für verschiedene Zuluft-Zusammensetzungen erfolgt.

12. Regler (12) zum Regeln einer Klimaanlage (10), welcher dazu eingerichtet ist,
- zu prüfen, ob die Klimaanlage (10) im Falle eines reinen Lüftungsbetriebs eine Innentemperatur eines zu klimatisierenden Raums (4) auf einen Referenz-Sollwert regeln kann, der innerhalb eines vorgegebenen, durch eine Obergrenze (26) und eine Untergrenze (28) begrenzten Sollwertbandes (24) liegt, und
- einen Innentemperatur-Sollwert (T_{S}) für die Klimaanlage (10) auf einen innerhalb des Sollwertbandes (24) liegenden, vom Referenz-Sollwert verschiedenen Wert zu setzen, falls die Prüfung ergibt, dass die Klimaanlage (10) im Falle des reinen Lüftungsbetriebs die Innentemperatur nicht auf den Referenz-Sollwert regeln kann,
**dadurch gekennzeichnet, dass**, falls die Prüfung ergibt, dass die Klimaanlage (10) im Falle des reinen Lüftungsbetriebs die Innentemperatur nicht auf den Referenz-Sollwert regeln kann,
- der vom Referenz-Sollwert verschiedene Wert, auf den der Innentemperatur-Sollwert (Ts) gesetzt wird, näher an der Obergrenze (26) des Sollwertbandes (24) liegt als der Referenz-Sollwert, wenn ein Istwert der Innentemperatur größer ist als der Referenz-Sollwert, beziehungsweise
- der vom Referenz-Sollwert verschiedene Wert, auf den der Innentemperatur-Sollwert (Ts) gesetzt wird, näher an der Untergrenze (28) des Sollwertbandes (24) liegt als der Referenz-Sollwert, wenn der Istwert der Innentemperatur kleiner ist als der Referenz-Sollwert.

13. Klimatisierungssystem (16), umfassend eine Klimaanlage (10) sowie einen mit der Klimaanlage (10) verbundenen Regler (12) nach Anspruch 12 zum Regeln der Klimaanlage (10).

14. Maschinenlesbares Speichermedium mit einem Programmcode, durch welchen ein Klimatisierungssystem (16) nach Anspruch 13 zur Ausführung eines Verfahrens nach einem der Ansprüche 1 bis 11 veranlasst wird, wenn der Programmcode vom Regler (12) des Klimatisierungssystems (16) ausgeführt wird.

## Claims

1. Method for operating an air-conditioning unit (10), in which it is checked whether the air-conditioning unit (10), when operated purely in ventilation mode, is able to adjust an indoor temperature of a space (4) to be climate-controlled to a reference setpoint lying within a specified setpoint range (24) defined by an upper limit (26) and a lower limit (28) and, if the result of the check is that the air-conditioning unit (10), when operated purely in ventilation mode, cannot adjust the indoor temperature to the reference setpoint, an indoor temperature setpoint (T_{S}) for the air-conditioning unit (10) is set to a value different from the reference setpoint but lying within the setpoint range (24),
**characterized in that**, if the result of the check is that the air-conditioning unit (10), when operated purely in ventilation mode, cannot adjust the indoor temperature to the reference setpoint,
- the value different from the reference setpoint to which the indoor temperature setpoint (T_{S}) is set lies closer to the upper limit (26) of the setpoint range (24) than the reference setpoint if an actual value of the indoor temperature is greater than the reference setpoint, or
- the value different from the reference setpoint to which the indoor temperature setpoint (T_{S}) is set lies closer to the lower limit (28) of the setpoint range (24) than the reference setpoint if the actual value of the indoor temperature is less than the reference setpoint.

2. Method according to Claim 1,
**characterized in that**, as a function of an actual value of the indoor temperature, a heat output is calculated which is to be produced by the air-conditioning unit (10) in order to bring the indoor temperature to the reference setpoint, and the check as to whether the air-conditioning unit (10), when operated purely in ventilation mode, is able to adjust the indoor temperature to the reference setpoint proceeds as a function of the calculated heat output.

3. Method according to one of the preceding claims,
**characterized in that**, if the result of the check is that the air-conditioning unit (10), when operated purely in ventilation mode, is able to adjust the indoor temperature to the reference setpoint, the indoor temperature is adjusted to the reference setpoint by means of the air-conditioning unit (10), wherein the air-conditioning unit (10) is operated purely in ventilation mode.

4. Method according to one of the preceding claims,
**characterized in that**, if the result of the check is that the air-conditioning unit (10), when operated purely in ventilation mode, cannot adjust the indoor temperature to the reference setpoint, the indoor temperature setpoint (T_{S}) is adapted incrementally and after each adaptation of the indoor temperature setpoint (T_{S}) the check is performed again as to whether the air-conditioning unit (10), when operated purely in ventilation mode, is able to adjust the indoor temperature to the in each case most up-to-date indoor temperature setpoint (T_{S}), wherein adaptation of the indoor temperature setpoint (T_{S}) is concluded when the most up-to-date indoor temperature setpoint (T_{S}) corresponds to the upper or lower limit (26, 28) of the setpoint range (24) or when the most up-to-date indoor temperature setpoint (T_{S}) is an indoor temperature setpoint to which the air-conditioning unit (10) can adjust the indoor temperature when operated purely in ventilation mode.

5. Method according to Claim 5,
**characterized in that**
- the incremental adaptation of the indoor temperature setpoint (T_{S}) is an incremental increase of the indoor temperature setpoint (T_{S}) if an actual value of the indoor temperature is greater than the reference setpoint, or
- the incremental adaptation of the indoor temperature setpoint (T_{S}) is an incremental reduction of the indoor temperature setpoint (T_{S}) if an actual value of the indoor temperature is less than the reference setpoint.

6. Method according to Claim 4 or 5,
**characterized in that**, when incremental adaptation of the indoor temperature setpoint (T_{S}) is concluded, the indoor temperature is adjusted to the most up-to-date indoor temperature setpoint (T_{S}) by means of the air-conditioning unit (10) .

7. Method according to one of Claims 4 to 6,
**characterized in that** the air-conditioning unit (10) is operated in heating or cooling mode if the incremental adaptation of the indoor temperature setpoint (T_{S}) is concluded and the most up-to-date indoor temperature setpoint (T_{S}) is not an indoor temperature setpoint to which the air-conditioning unit (10), when operated purely in ventilation mode, can adjust the indoor temperature.

8. Method according to one of Claims 4 to 7, **characterized in that** the air-conditioning unit (10) is operated purely in ventilation mode if the incremental adaptation of the indoor temperature setpoint (T_{S}) is concluded and the most up-to-date indoor temperature setpoint (T_{S}) is an indoor temperature setpoint to which the air-conditioning unit (10), when operated purely in ventilation mode, can adjust the indoor temperature.

9. Method according to one of the preceding claims,
**characterized in that**, if the air-conditioning unit (10) is operated in heating mode, the indoor temperature is adjusted to the lower limit (28) of the setpoint range (24) and, if the air-conditioning unit (10) is operated in cooling mode, it is adjusted to the upper limit (26) of the setpoint range (24).

10. Method according to one of the preceding claims,
**characterized in that** the check as to whether the air-conditioning unit (10), when operated purely in ventilation mode, is able to adjust the indoor temperature to the reference setpoint proceeds as a function of a minimum outdoor air quantity to be blown into the space (4) to be climate-controlled.

11. Method according to one of the preceding claims,
**characterized in that** the check as to whether the air-conditioning unit (10), when operated purely in ventilation mode, is able to adjust the indoor temperature to the reference setpoint proceeds for different feed air compositions.

12. Controller (12) for controlling an air-conditioning unit (10) which is configured
- to check whether the air-conditioning unit (10), when operated purely in ventilation mode, is able to adjust an indoor temperature of a space (4) to be climate-controlled to a reference setpoint lying within a specified setpoint range (24) defined by an upper limit (26) and a lower limit (28), and
- to set an indoor temperature setpoint (T_{S}) for the air-conditioning unit (10) to a value lying within the setpoint range (24) but different from the reference setpoint, if the result of the check is that the air-conditioning unit (10), when operated purely in ventilation mode, cannot adjust the indoor temperature to the reference setpoint,
**characterized in that**, if the result of the check is that the air-conditioning unit (10), when operated purely in ventilation mode, cannot adjust the indoor temperature to the reference setpoint,
- the value different from the reference setpoint to which the indoor temperature setpoint (T_{S}) is set lies closer to the upper limit (26) of the setpoint range (24) than the reference setpoint if an actual value of the indoor temperature is greater than the reference setpoint, or
- the value different from the reference setpoint to which the indoor temperature setpoint (T_{S}) is set lies closer to the lower limit (28) of the setpoint range (24) than the reference setpoint if the actual value of the indoor temperature is less than the reference setpoint.

13. Climate-control system (16), comprising an air-conditioning unit (10) and a controller (12) according to Claim 12 connected to the air-conditioning unit (10) for controlling the air-conditioning unit (10).

14. Machine-readable storage medium with a program code, by which a climate-control system (16) according to Claim 13 is prompted to carry out a method according to one of Claims 1 to 11 when the program code is executed by the controller (12) of the climate-control system (16).

## Revendications

1. Procédé pour faire fonctionner une installation (10) de conditionnement d'air, dans lequel on contrôle si l'installation (10) de conditionnement d'air peut, dans le cas d'un fonctionnement en ventilation simple, régler une température à l'intérieur d'un espace (4) à conditionner à une valeur de consigne de référence, qui se trouve dans une bande (24) de valeur de consigne donnée à l'avance, délimitée par une borne (26) supérieure et une borne (28) inférieure et, si le contrôle donne que l'installation (10) de conditionnement d'air ne peut pas, dans le cas d'un fonctionnement en ventilation simple, régler la température intérieure à la valeur de consigne de référence, on met une valeur (T_{S}) de consigne de la température intérieure pour l'installation (10) de conditionnement d'air à une valeur, qui est dans la bande (24) de valeur de consigne, différente de la valeur de consigne de référence,
**caractérisé en ce que**, si le contrôle donne que l'installation (10) de conditionnement d'air ne peut pas, dans le cas d'un fonctionnement en ventilation simple, régler la température intérieure à la valeur de consigne de référence,
- la valeur, différente de la valeur de consigne de référence, à laquelle on met la valeur (T_{S}) de consigne de température intérieure, est plus près de la borne (26) supérieure de la bande (24) de valeur de consigne que la valeur de consigne de référence, si une valeur réelle de la température intérieure est plus haute que la valeur de consigne de référence, et respectivement
- la valeur, différente de la valeur de consigne de référence, à laquelle on met la valeur (T_{S}) de consigne de température intérieure est plus près de la borne (28) inférieure de la bande (24) de valeur de consigne que la valeur de consigne de référence, si la valeur réelle de la température intérieure est plus basse que la valeur de consigne de référence.

2. Procédé suivant la revendication 1,
**caractérisé en ce que** l'on calcule, en fonction d'une valeur réelle de la température intérieure, une puissance calorifique, qui doit être apportée à l'installation (10) de conditionnement d'air, pour mettre la température intérieure à la valeur de consigne de référence, et le contrôle du point de savoir si l'installation (10) de conditionnement d'air peut, dans le cas d'un fonctionnement en ventilation simple, régler la température intérieure à la valeur de consigne de référence, s'effectue en fonction de la puissance calorifique calculée.

3. Procédé suivant l'une des revendications précédentes,
**caractérisé en ce que**, si le contrôle donne que l'installation (10) de conditionnement d'air peut, dans le cas du fonctionnement en ventilation simple, régler la température intérieure à la valeur de consigne de référence, on règle la température intérieure au moyen de l'installation (10) de conditionnement d'air à la valeur de consigne de référence, dans lequel on fait fonctionner l'installation (10) de conditionnement d'air en fonctionnement en ventilation simple.

4. Procédé suivant l'une des revendications précédentes,
**caractérisé en ce que**, si le contrôle donne que l'installation (10) de conditionnement d'air ne peut pas, dans le cas du fonctionnement en ventilation simple, régler la température intérieure à la valeur de consigne de référence, on adapte pas à pas la valeur (T_{S}) de consigne de température intérieure et, après chaque adaptation de la valeur (T_{S}) de consigne de température intérieure, on contrôle à nouveau si l'installation (10) de conditionnement d'air peut, dans le cas d'un fonctionnement en ventilation simple, régler la température intérieure à la valeur (T_{S}) de consigne de température intérieure respectivement la dernière en cours, dans lequel on met fin à l'adaptation de la valeur (T_{S}) de consigne de température intérieure, si la valeur (T_{S}) de consigne de température intérieure la dernière en cours correspond à la borne (26) supérieure ou à la borne (28) inférieure de la bande (24) de valeur de consigne ou si la valeur (T_{S}) de consigne de température intérieure la dernière en cours est une valeur de consigne de température intérieure, sur laquelle l'installation (10) de conditionnement d'air peut régler la température intérieure, dans le cas du fonctionnement en ventilation simple.

5. Procédé suivant la revendication 5,
**caractérisé en ce que**
- l'adaptation pas à pas de la valeur (T_{S}) de consigne de température intérieure est une élévation pas à pas de la valeur (T_{S}) de consigne de température intérieure, si une valeur réelle de la température intérieure est plus haute que la valeur de consigne de référence, et respectivement
- l'adaptation pas à pas de la valeur (T_{S}) de consigne de température intérieure est un abaissement pas à pas de la valeur (T_{S}) de consigne de température intérieure, si une valeur réelle de la température intérieure est plus basse que la valeur de consigne de référence.

6. Procédé suivant la revendication 4 ou 5,
**caractérisé en ce que**, s'il est mis fin à l'adaptation pas à pas de la valeur (T_{S}) de consigne de température intérieure, on règle la température intérieure au moyen de l'installation (10) de conditionnement d'air à la valeur (T_{S}) de consigne de température intérieure la dernière en cours.

7. Procédé suivant l'une des revendications 4 à 6,
**caractérisé en ce que** l'on fait fonctionner l'installation (10) de conditionnement d'air en fonctionnement de chauffage ou en fonctionnement de refroidissement, s'il est mis fin à l'adaptation pas à pas de la valeur (T_{S}) de consigne de température intérieure et, si la valeur (T_{S}) de consigne de température intérieure la dernière en cours n'est pas une valeur de consigne de température intérieure à laquelle l'installation (10) de conditionnement d'air peut, dans le cas du fonctionnement en ventilation simple, régler la température intérieure.

8. Procédé suivant l'une des revendications 4 à 7,
**caractérisé en ce que** l'on fait fonctionner l'installation (10) de conditionnement d'air en fonctionnement de ventilation simple, s'il est mis fin à l'adaptation pas à pas de la valeur (T_{S}) de consigne de température intérieure et si la valeur (T_{S}) de consigne de température intérieure la dernière en cours est une valeur de consigne de température intérieure à laquelle l'installation (10) de conditionnement d'air peut, dans le cas du fonctionnement en ventilation simple, régler la température intérieure.

9. Procédé suivant l'une des revendications précédentes,
**caractérisé en ce que** l'on règle la température intérieure, dans le cas d'un fonctionnement en chauffage de l'installation (10) de conditionnement d'air, à la borne (28) inférieure de la bande (24) de valeur de consigne, et dans le cas d'un fonctionnement en refroidissement de l'installation (10) de conditionnement d'air, à la borne (26) supérieure de la bande (24) de valeur de consigne.

10. Procédé suivant l'une des revendications précédentes,
**caractérisé en ce que** le contrôle du point de savoir, si l'installation (10) de conditionnement peut, dans le cas d'un fonctionnement en ventilation simple, régler la température intérieure à la valeur de consigne de référence, s'effectue en fonction d'une quantité d'air extérieure minimum à insuffler dans l'espace (4) à conditionner.

11. Procédé suivant l'une des revendications précédentes,
**caractérisé en ce que** le contrôle du point de savoir, si l'installation (10) de conditionnement d'air peut, dans le cas d'un fonctionnement en ventilation simple, régler la température intérieure à la valeur de consigne de référence, s'effectue pour diverses compositions de l'air affluent.

12. Régleur (12) de régulation d'une installation (10) de conditionnement d'air, qui est agencé
- pour contrôler si l'installation (10) de conditionnement d'air peut, dans le cas d'un fonctionnement en ventilation simple, régler une température intérieure d'un espace (4) à conditionner à une valeur de consigne de référence, qui se trouve dans une bande (24) de valeur de consigne, délimitée par une borne (26) supérieure et par une borne (28) inférieure, et
- pour mettre une valeur (T_{S}) de consigne de température intérieure pour l'installation (10) de conditionnement d'air à une valeur se trouvant dans la bande (24) de valeur de consigne et différente de la valeur de consigne de référence, si le contrôle donne que l'installation (10) de conditionnement d'air ne peut pas, dans le cas en fonctionnement en ventilation simple, régler la température intérieure à la valeur de consigne de référence,
**caractérisé en ce que**, si le contrôle donne que l'installation (10) de conditionnement d'air ne peut pas, dans le cas d'un fonctionnement en ventilation simple, régler la température intérieure à la valeur de consigne de référence,
- la valeur, différente de la valeur de consigne de référence, à laquelle on met la valeur (T_{S}) de consigne de température intérieure, est plus près de la limite (26) supérieure de la bande (24) de valeur de consigne que la valeur de consigne de référence, si une valeur réelle de la température intérieure est plus haute que la valeur de consigne de référence, et respectivement
- la valeur, différente de la valeur de consigne de référence, à laquelle on met la valeur (T_{S}) de consigne de température intérieure est plus près de la borne (28) inférieure de la bande (24) de valeurs de consigne que la valeur de consigne de référence, si la valeur réelle de la température intérieure est plus basse que la valeur de consigne de référence.

13. Système (16) de conditionnement d'air comprenant une installation (10) de conditionnement d'air ainsi qu'un régleur (12) suivant la revendication 12, relié à l'installation (10) de conditionnement d'air pour régler l'installation (10) de conditionnement d'air.

14. Support de mémoire, déchiffrable par machine, comprenant un code de programme, par lequel on fait qu'un système (16) de conditionnement d'air suivant la revendication 13 effectue un procédé suivant l'une des revendications 1 à 11, lorsque le code de programme est réalisé par le régleur (12) du système (16) de conditionnement d'air.
